# EUROPEAN PATENT SPECIFICATION

(11) **EP 3 772 412 B1**
(45) Date of publication and mention of the grant of the patent: **26.06.2024**
(21) Application number: 20189178.5
(22) Date of filing: 03.08.2020
(51) Int. Cl.: B32B 1/00, B32B 7/12, B32B 29/00, B32B 29/08, B65D 65/40

(54) **A RECYCLABLE MULTI-LAYERED STRUCTURE**
WIEDERVERWERTBARE MEHRSCHICHTIGE STRUKTUR
UNE STRUCTURE MULTICOUCHE RECYCLABLE

(30) Priority: 09.08.2019 IT 201900014523
(43) Date of publication of application: 10.02.2021
(73) Proprietor: Pillow S.r.l., 31036 Istrana (TV) (IT)
(72) Inventor: ZAGO, Bruno, 20121 MILANO (MI) (IT)
(74) Representative: Burchielli, Riccardo

(56) References cited:
- EP-B1- 2 651 642
- WO-A1-2013/067153
- US-B1- 6 695 138

## Description

This invention generally relates to a fully recyclable multilayered structure, which can be used in particular, but not exclusively, for packaging and/or wrapping.

The object of the invention is also a process for production of a multilayered structure of the type described.

Specifically, the invention relates to a new type of recyclable material that can be used, among other things, for the production of containers and/or packaging subject to contact with liquids, oily substances and fluid substances in general.

The main technical problem that the materials used for such purposes aim to solve, even in their already known variants, is to limit or control a possible accumulation of fluid substances, such as water or oily substances, inside them.

An example of a typical application is that of modern containers used for preserving food, such as fruit, meat and derivatives; they usually consist of polystyrene trays made by moulding, which have a spongy material pad on the bottom, which is capable of absorbing excess liquids.

This is necessary both for reasons of the healthiness of the food itself, since the accumulated liquids could encourage the proliferation of pathogenic micro-organisms, and for aesthetic reasons, since a consumer may be less inclined to buy a product stored in a container in which this accumulation of liquids is visible.

In addition, another issue that has now become especially relevant in the field of materials in general is their recyclability once they reach the end of their life.

Currently, multilayered materials based on laminated films are well known; due to their diverse composition, the majority of these materials, as well as packaging using these materials, are difficult to recycle.

As a result, they have to be sent to landfill or incinerated, which is not very convenient from an economic point of view as well as being harmful to the health of the environment and humans.

The need therefore remains to have a multilayered material that is able to avoid the accumulation of liquids that may be present, for example by absorbing them, and that is easy to produce, for example in the form of rolls or panels to be cut and shaped at will according to certain dimensions, and easy to recycle.

The relevant prior art also comprises the patent application document EP2651642B1 describing a multilayer based on cellulose and its derivatives.

The objective of the invention is therefore to make a fully recyclable multilayered structure or material which is capable of overcoming the drawbacks described above.

Another objective of the invention is to provide a recyclable multilayered structure or material that is not subject to a deterioration in performance or storage conditions of the products it contains compared to existing solutions.

Another aim of the invention is to make a recyclable multilayered structure or material using cheap and easily available raw materials.

These and other aims are achieved by a recyclable multilayered structure according to the accompanying claim 1; further details and technical characteristics of the invention are contained in the accompanying dependent claims.

The invention will now be described, by way of example according to its preferred embodiments and with the help of the accompanying drawings, in which:
- Figure 1 shows a first application example of the recyclable multilayered structure according to the invention, in the form of a box food packaging;
- Figure 2 shows a second application example of the recyclable multilayered structure according to the invention, in the form of a food packaging with edges that allow an easy application of a film to protect the contents;
- Figure 3 schematically shows a partial cross-section of the fully recyclable multilayered structure which is not according to the invention;
- Figure 4 schematically shows a partial cross-section of the fully recyclable multilayered structure not according to the invention;
- Figure 5 schematically shows a partial cross-section of the fully recyclable multilayered structure which is the object of the invention, according to an embodiment;
- Figure 6 schematically shows a partial cross-section of the fully recyclable multilayered structure which is the object of the invention, according to an embodiment;
- Figure 7 schematically shows a partial cross-section of the fully recyclable multilayered structure not according to the invention;

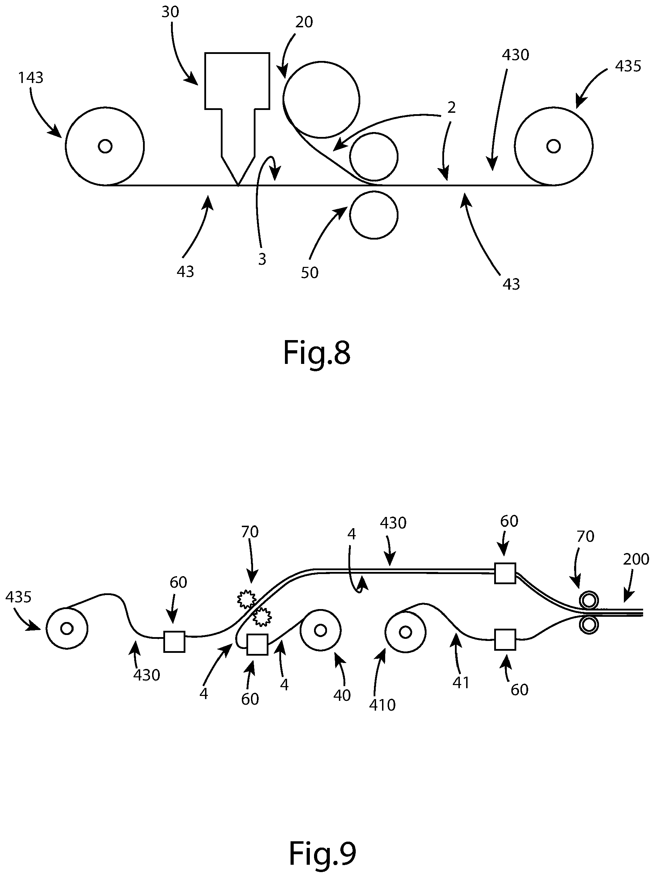

- Figures 8 and 9 are schematic representations of a process for production of the multilayered structure according to the invention.

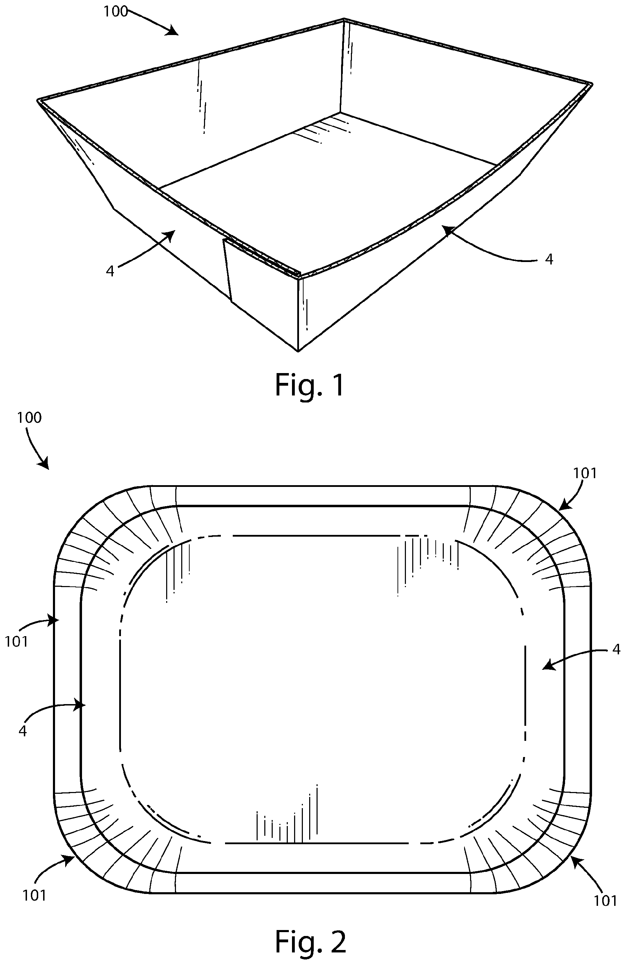

With reference to Figures 1 and 2, which represent preferred and non-exhaustive examples of the invention in the field of packaging and wrapping, the numeral 100 indicates a container or receptacle, in particular a tray, having the walls made according to the multilayered structure which is the object of the invention.

The shape shown in Figure 1 is substantially quadrangular, with four side walls and a bottom surface, and can be made using a portion of recyclable multilayered material suitably cut from a roll or panel suitably sized, folding and/or gluing the corner surfaces; however, due to the extreme flexibility which is typical of this material, the container 100 can be produced in a wide variety of shapes and sizes, allowing, for example, to store or contain objects or products of very different nature.

More specifically, particular characteristics of the multilayered structure according to the invention are:
the possibility of obtaining a smooth, soft and water-repellent surface, both on the outside and in contact with the object and/or product packaged, while maintaining the material's absorption capacity intact;
the presence of a layer always suitable for food contact.

Figure 2 is a second application example of the fully recyclable multilayered structure 200, according to the invention, wherein the multilayered material is used for the manufacture of a food container 100 equipped with walls with shaped edges 101 for the application of a protective and sealing film (not shown).

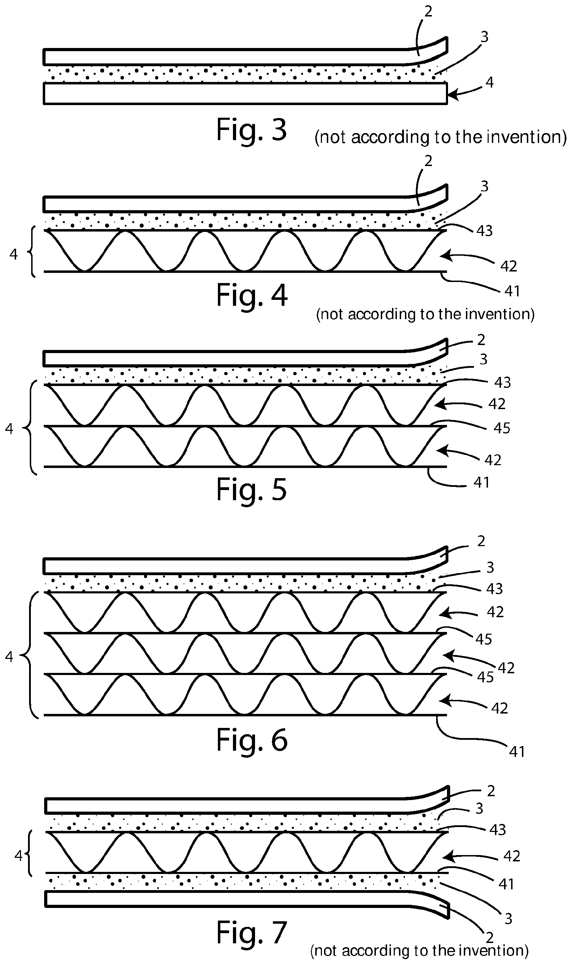

With particular reference to Figures 5 and 6, the multilayered structure 200 according to the invention consists of material made with a basic layer 4, to which is associated an absorbent layer 2 and an intermediate adhesive layer 3, which joins the basic layer 4 to the absorbent layer 2.

In detail, the material with which the absorbent layer 2 is made comprises cellulose, in particular pure cellulose, used for its high absorbent capacity and high recyclability compared to similar polymers; in fact, the absorbent capacity of cellulose can reach values equal to twelve times the weight of the cellulose used to make the coating, making it a convenient alternative from an economic point of view (low cost) and in terms of performance (high ratio of liquid absorbed/weight).

Consequently, the cellulose used, since it is preferably virgin cellulose, makes the container suitable in any case for food contact, unlike regenerated cellulose, which may not be suitable in many cases.

In addition, another absorbent material similar to cellulose or capable of performing the same functions may be used in combination with cellulose.

The adhesive layer 3, positioned between the basic layer 4 of the multilayered material and the absorbent layer 2, advantageously comprises an adhesive consisting of a totally recyclable substance; this is advantageous once the multilayered material has to be disposed of, as it can be fully recycled in terms of the paper/cardboard fraction, without any intermediate operation of mechanical separation between the components to be recycled and components that constitute other types of waste.

This adhesive layer 3 is suitable for contact with food and has water-repellent characteristics. The adhesive 3 used is biodegradable polyethylene and suitable for contact with food.

In this way, if the multilayered structure 200 is used as packaging, it is possible to obtain a storage environment for a product inside the container 100 which is insulated and very resistant to contamination, given the presence of the adhesive layer 3 which acts as a barrier to the passage of substances and micro-organisms, both into and out of the container 100. In the same way, a surface made from the multilayered material according to the invention will be able to isolate the surface on which it is placed from possible contamination due to fluid substances, which are thus eliminated from the absorbent layer 2.

In a reference example not according to the invention, the basic layer 4 can be made of cardboard or stiff card (as shown schematically in the embodiment shown in Figure 3).

According to the invention (shown schematically in Figures 5 and 6, the basic layer 4 is made of corrugated cardboard consisting of a lower or outer cover 41 and, in succession, two or more undulations 42 divided by one or more stiff sheets 45, and an upper or inner cover 43; the corrugated cardboard is made of two or more undulations 42 (of any type and, in particular, of any height) and on the lower and/or upper covers 41, 43 are placed in succession the adhesive layer 3 and the absorbent layer 2.

In this way, the coupling of corrugated cardboard is obtained, with two or more waves (that is, the undulations 42 shown in Figures 4 to 7), to the absorbent layer 2, by means of the adhesive layer 3, obtaining a totally and fully recyclable multilayered structure 200.

Advantageously, the resistance and absorption characteristics of the layers 2 and 3 allow the multilayered material to be placed even in damp environments or in contact with fluid substances, which could impregnate the surfaces, without compromising the goodness and hygiene of a product or object in contact with the material.

In fact, the supporting surface underneath the material remains dry, just as the structural integrity of the material is not affected by the presence of liquids.

This is of fundamental importance in the case of products containing water or its solutions, oils or fluids in general to be prevented from circulating or accumulating in the inner space of a container or on a supporting surface.

Two or more undulations 42 are present (reference is made below to double wave and triple wave), depending on the characteristics of the product to be stored and/or on the conditions of storage or transport of the multilayered material; by using several undulations 42 it is possible to obtain a better thermal insulation of a container with respect to an external environment (thanks to the spaces of the of the cardboard filled with air), as well as a higher resistance to possible impacts and undesired mechanical stress.

Not according to the invention, it is possible to apply the absorbent layer 2, by means of the adhesive layer 3, also on the outer surface of the bottom cover 41 (as shown in detail in Figure 7). Summing up, a possible configuration that can be used for the manufacture of the fully recyclable multilayered structure 200 according to the invention may preferably include all of the above-mentioned elements, that is:
- the bottom or outer cover 41 placed outside the undulations 42 of the corrugated cardboard;
- two or more undulations 42 of any type and height, to form a multilayered structure 200, and integrating a stiff sheet 45 between the undulations 42;
- the top or inner cover 43 placed outside the undulations 42 of the corrugated cardboard;
- the adhesive layer 3, placed externally to the basic layer 4 made with water-repellent and recyclable adhesive, and in any case able to create a barrier to the crossing of fluids and/or other types of undesirable compounds;
- the absorbent layer 2, preferably made of pure cellulose, used for the removal of aqueous or oily liquids possibly in contact with the multilayered material.

As mentioned above, the absorbent layer 2 can be advantageously coupled directly to the top or outer cover 41, or different gluing methods can be used, such as by means of a second absorbent layer 2, in particular of pure cellulose, coupled, by means of a second adhesive layer 3, to the first absorbent layer 2.

According to the invention, corrugated cardboard which is die-cut, folded and/or thermoformed is used for making the basic layers 4 of the packaging

In this way, it will be possible to advantageously use the multilayered material to make objects of any shape, colour and size, and to use them for the most varied uses, whether they are for food or not.

Operationally, the multilayered structure 200 is made according to a series of successive operations, namely a first coupling of a certain number of layers, followed by the creation of the corrugated cardboard, followed by a second coupling, which provides the final multilayered structure 200.

The production process for a multilayered structure is described by way of example.

Initially, a supporting layer, in this case the inner cover 43, which is wound on a first reel 143, is unwound by rollers in a production line, arriving close to an extruder 30.

The extruder 30 deposits a thin layer of adhesive 3, which is biodegradable polyethylene suitable for food contact, on a surface of the cover 43.

Subsequently, the absorbent layer 2, preferably virgin cellulose suitable for food contact, unrolled by a second reel 20, is coupled on the adhesive layer 3.

The sheet 430 made up of these three layers enters a calender 50, where it is pressed to ensure homogeneous gluing.

It then continues to flow through the production line until it is rewound, once cooled, onto a third reel 435.

The reel 435 is then moved to a new line to be coupled to the undulation 42; it is placed on a fourth reel 40 in the form of an non-deformed cardboard sheet, and is joined to the sheet 430 by means of an undulating device 70. Finally, the undulation 42 is coupled to the outer cover 41, by means of a fifth reel 410, by means of the rollers 70.

Preferably, before each coupling the various sheets are heated in special heaters 60.

At this point the multilayered structure 200, comprising the basic layer 4, together with an absorbent layer 2 of special cellulose bonded by means of an adhesive 3, is ready to be shaped and transformed into containers, sheets or other.

The characteristics of the fully recyclable multilayered structure 200 according to the invention clearly emerge from the description, as do the advantages thereof.

Among these advantages, the most significant are the following:
- complete recyclability of the multilayered material;
- high absorption capacity of the fluid substances in contact with the material;
- barrier effect of the adhesive layer against liquid and oily substances;
- compatibility of the adhesive layer with food contact;
- better visual appearance and better hygiene of the product in contact with the material, compared to the prior art;
- maintaining a clean, soft and water-repellent surface in contact with the product;
- thermal insulation with respect to the environment;
- versatility and ease of implementation;
- versatility of use, food and non-food, for example as a support surface for objects containing liquid or fluid substances in general;
- low costs by virtue of the benefits achieved.

## Claims

1. A recyclable multilayered structure (200) comprising
at least one basic layer (4), which is coupled to an absorbent layer (2) comprising cellulose by means of at least one water repellent adhesive layer (3), wherein
said at least one basic layer (4) comprises at least one corrugated cardboard,
said corrugated cardboard includes
a bottom or outer cover (41),
a top or inner cover (43) and two or more undulations (42) enclosed between said outer and inner covers (41, 43), wherein
said water repellent adhesive layer (3) is a biodegradable polyethylene, suitable for contact with food and placed between said inner cover (43) and said absorbent layer (2), and wherein said corrugated cardboard is die-cut, folded and/or thermoformed,
**characterised in that** a stiff card (45) is interposed between two of said undulations (42).

2. The recyclable multilayered structure (200) according to claim 1, **characterised by** the fact that said stiff card is die-cut, folded and/or thermoformed.

3. A process for production of a recyclable multilayered structure (200) according to any one of claims 1 to 2, comprising the following steps in successive order:
(a) providing an inner cover (43);
(b) placing a water repellent adhesive layer (3) on said inner cover (43);
(c) depositing on said water repellent adhesive layer (3) an absorbent layer (2) comprising cellulose, creating a sheet (430);
(d) coupling one or more undulations (42) to said inner cover (43);
(e) coupling to said one or more undulations (42) an outer cover (41) so as to form a basic layer (4) of corrugated cardboard,
wherein said water repellent adhesive layer (3) comprises biodegradable polyethylene and suitable for contact with food, said water repellent adhesive layer (3) being placed between said inner cover (43) and said absorbent layer (2), and wherein said corrugated cardboard is die-cut, folded and thermoformed and wherein a stiff card (45) is interposed between two of said undulations (42).

## Patentansprüche

1. Recycelbare mehrschichtige Struktur (200) die mindestens eine Basisschicht (4) umfasst, die mit einer absorbierenden Schicht (2), die Zellulose umfasst, mittels mindestens einer wasserabweisenden Klebeschicht (3) verbunden ist, wobei die mindestens eine Basisschicht (4) mindestens eine Wellpappe umfasst, wobei die Wellpappe eine untere oder äußere Abdeckung (41), eine obere oder innere Abdeckung (43) und zwei oder mehr Wellen (42) umfasst, die zwischen den äußeren und inneren Abdeckungen (41, 43) eingeschlossen sind, wobei die wasserabweisende Klebstoffschicht (3) ein biologisch abbaubares Polyethylen ist, Polyethylen ist, das für den Kontakt mit Lebensmitteln geeignet ist und zwischen der inneren Abdeckung (43) und der absorbierenden Schicht (2) angeordnet ist, und wobei die Wellpappe gestanzt, gefaltet und/oder thermogeformt ist, **dadurch gekennzeichnet, dass** eine steife Karte (45) zwischen zwei der Wellungen (42) angeordnet ist.

2. Recycelbare mehrschichtige Struktur (200) nach Anspruch 1, **dadurch gekennzeichnet, dass** die steife Karte gestanzt, gefaltet und/oder thermogeformt ist.

3. Verfahren zur Herstellung einer recycelbaren mehrschichtigen Struktur (200) nach einem der Ansprüche 1 bis 2, das die folgenden Schritte in aufeinanderfolgender Reihenfolge umfasst:
(a) Bereitstellen einer inneren Abdeckung (43);
(b) Aufbringen einer wasserabweisenden Klebstoffschicht (3) auf die innere Abdeckung (43);
(c) Aufbringen einer absorbierenden Schicht (2), die Zellulose umfasst, auf die wasserabweisende Klebstoffschicht (3), wodurch ein Blatt (430) entsteht;
(d) Verbinden einer oder mehrerer Wellungen (42) mit der inneren Abdeckung (43);
(e) Verbinden einer oder mehrerer Wellungen (42) mit einer äußeren Abdeckung (41), um eine Basisschicht (4) aus Wellpappe zu bilden, wobei die wasserabweisende Klebstoffschicht (3) biologisch abbaubares Polyethylen umfasst und für den Kontakt mit Lebensmitteln geeignet ist, wobei die wasserabweisende Klebstoffschicht (3) zwischen der inneren Abdeckung (43) und der absorbierenden Schicht (2) angeordnet ist, und wobei die Wellpappe gestanzt, gefaltet und thermogeformt ist und wobei eine steife Karte (45) zwischen zwei der Wellungen (42) angeordnet ist.

## Revendications

1. Structure multicouche recyclable (200) comprenant au moins une couche de base (4), qui est couplée à une couche absorbante (2) comprenant de la cellulose au moyen d'au moins une couche adhésive hydrofuge (3), dans laquelle ladite au moins une couche de base (4) comprend au moins un carton ondulé, ledit carton ondulé comprend une couverture inférieure ou extérieure (41), une couverture supérieure ou intérieure (43) et deux ou plusieurs ondulations (42) enfermées entre lesdites couvertures extérieure et intérieure (41, 43), dans lequel ladite couche adhésive hydrofuge (3) est un polyéthylène biodégradable, apte au contact avec les aliments et placée entre ladite couverture intérieure (43) et ladite couche absorbante (2), et dans laquelle ledit carton ondulé est découpé à l'emporte-pièce, plié et/ou thermoformé, **caractérisé par le fait qu'**une carte rigide (45) est interposée entre deux desdites ondulations (42).

2. Structure multicouche recyclable (200) selon la revendication 1, **caractérisée par le fait que** ladite carte rigide est découpée à l'emporte-pièce, pliée et/ou thermoformée.

3. Procédé de fabrication d'une structure multicouche recyclable (200) selon l'une quelconque des revendications 1 à 2, comprenant les étapes suivantes dans l'ordre successif:
(a) réalisation d'une couverture intérieure (43);
(b) placer une couche adhésive hydrofuge (3) sur ladite couverture intérieure (43);
(c) déposer sur ladite couche adhésive hydrofuge (3) une couche absorbante (2) comprenant de la cellulose, créant ainsi une feuille (430);
(d) coupler une ou plusieurs ondulations (42) à ladite couverture intérieure (43);
(e) coupler à cette ou ces ondulations (42) une couverture extérieure (41) de manière à former une couche de base (4) en carton ondulé, dans laquelle ladite couche adhésive hydrofuge (3) comprend du polyéthylène biodégradable et convient au contact avec les aliments, ladite couche adhésive hydrofuge (3) étant placée entre ladite couverture intérieure (43) et ladite couche absorbante (2), et dans laquelle ledit carton ondulé est découpé, plié et thermoformé et dans laquelle une carte rigide (45) est interposée entre deux desdites ondulations (42).
